(19) Europäisches Patentamt / European Patent Office / Office européen des brevets

(11) **EP 2 726 901 B1**

(12) **EUROPEAN PATENT SPECIFICATION**

(45) Date of publication and mention
of the grant of the patent:
**23.03.2016 Bulletin 2016/12**

(21) Application number: **11868545.2**

(22) Date of filing: **28.06.2011**

(51) Int Cl.:
**G01S 13/95** (2006.01)     **G01S 7/02** (2006.01)
**G01S 7/41** (2006.01)

(86) International application number:
**PCT/US2011/042187**

(87) International publication number:
**WO 2013/002768 (03.01.2013 Gazette 2013/01)**

(54) **OFF-DIAGONAL ELEMENT ECHO POWER ESTIMATOR FOR POLARIZATION WEATHER RADAR**

ECHOLEISTUNGSKALKULATION EINES DIAGONALVERSETZTEN ELEMENTS FÜR
POLARISATIONSWETTERRADAR

SYSTÈME D'ESTIMATION DE LA PUISSANCE DE L'ÉCHO D'UN ÉLÉMENT HORS DIAGONALE
POUR UN RADAR MÉTÉOROLOGIQUE À POLARISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**07.05.2014 Bulletin 2014/19**

(73) Proprietor: **Vaisala, OYJ
00421 Helsinki (FI)**

(72) Inventors:
• **KERÄNEN, Reino
FI-02920 Espoo (FI)**

• **VENKATACHALAM, Chandrasekaran
Fort Collins, Colorado 80528 (US)**

(74) Representative: **Seppo Laine Oy
Itämerenkatu 3 B
00180 Helsinki (FI)**

(56) References cited:
**US-A- 5 621 410        US-A- 5 990 834
US-A1- 2007 222 661     US-A1- 2008 012 755
US-A1- 2009 295 627     US-A1- 2010 090 884
US-A1- 2011 102 249**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

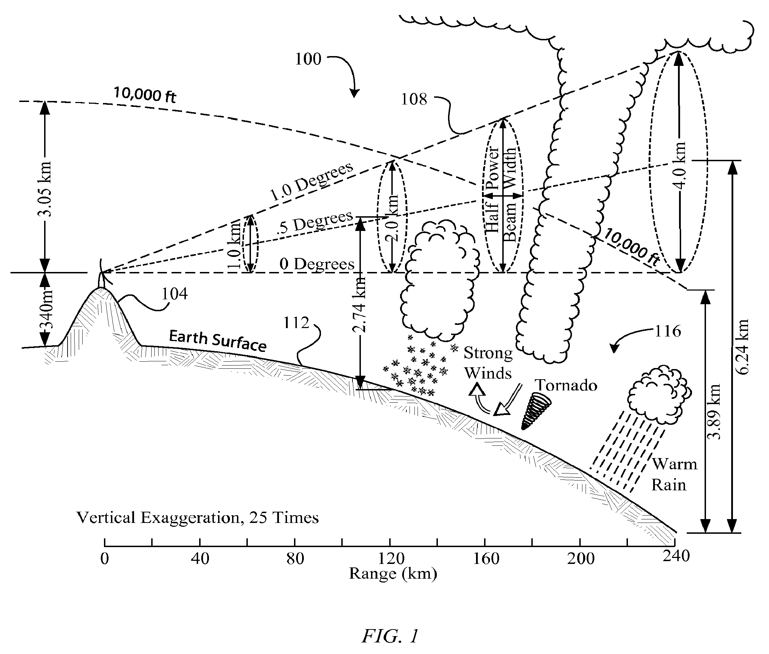

One of the fundamental objectives of meteorological radar systems is to sample the atmosphere surrounding the Earth to provide a quantitative measure of precipitation. Conventional meteorological radars provide coverage over long ranges, often on the order of hundreds of kilometers. A general schematic of how such conventional radar systems function is provided in Figure 1. In this illustration, a radar is disposed at the peak of a raised geographical feature such as a hill or mountain 104. The radar generates an electromagnetic beam 108 that disperses approximately linearly with distance, with the drawing showing how the width of the beam 108 thus increases with distance from the radar. Various examples of weather patterns 116 that might exist and which the system 100 attempts to sample are shown in different positions above the surface 112 of the Earth. The collection of radar data can be subject to various parameters and losses can occur due to noise.

Document US 2007/222661 A1 discloses a system for simultaneously propagating dual polarized signals in a polarimetric radar system which includes a system for shifting the phase of one of the two signals. The simultaneous dual polarization weather radar transmits signals in both the horizontal and the vertical orientations at the same time. Upon reception, the signals in each channel are isolated and a number of standard and polarimetric parameters characterizing atmospheric conditions are determined.

BRIEF SUMMARY OF THE INVENTION

Embodiments of the invention improve the sensitivity of polarimetric radar data. This can be done during post processing or in real time during data collection. The sensitivity can be improved by calculating the reflectivity from a co-polar element (off-diagonal element) of the polarimetric covariance matrix, where the polarimetric covariance matrix is calculated from the complex antenna voltages projected in the horizontal and vertical polarization states.

BRIEF DESCRIPTION OF THE DRAWINGS

The patent or application file contains at least one drawing executed in color. Copies of this patent or patent application publication with color drawing(s) will be provided by the Office upon request and payment of the necessary fee.

Figure 1 provides a schematic illustration of the operation of a conventional radar system (reproduced from the National Academy of Sciences Report, "Flash flood forecasting over complex terrain").

Figure 2 shows a simplified block diagram of a computational system that can be used to implement embodiments of the invention. Figure 3 is a flow chart of a process for determining the precipitation echo power and/or the reflectivity according to some embodiments of the invention.

Figure 3 is a flow chart of a process for determining the precipitation echo power and/or the reflectivity according to some embodiments of the invention.

Figure 4 is a graph showing the mean sensitivity improvements that can result by implementing the embodiments of this invention.

Figure 5 is a graph showing the observed mean reflectivity and noise expectation values from a single radial using conventional techniques and the embodiments of this invention.

Figure 6 is a side-by-side comparison of radar profiles analyzed using conventional techniques and embodiments of the invention.

Figure 7 shows comparisons of echo detection profiles using embodiments of the invention and various conventional techniques.

DETAILED DESCRIPTION OF THE INVENTION

Embodiments of the invention improve the sensitivity of polarimetric radar data. In particular, embodiments of the invention improve the sensitivity of such systems with improved post processing techniques. This can be done using a co-polar element (off-diagonal element) of the covariance matrix to estimate the power and/or reflectivity of a region of interest. Such practices can also enhance echo identification and improve quantitative estimates of precipitation. Some embodiments of the invention have shown signal improvements by at least 3dB.

Embodiments of the invention can be implemented in a number of ways. For instance, embodiments of the invention can be used in real-time with a polarimetric radar system or during post processing on previously collected polarimetric radar I/Q data. Embodiments of the invention can be implemented by software.

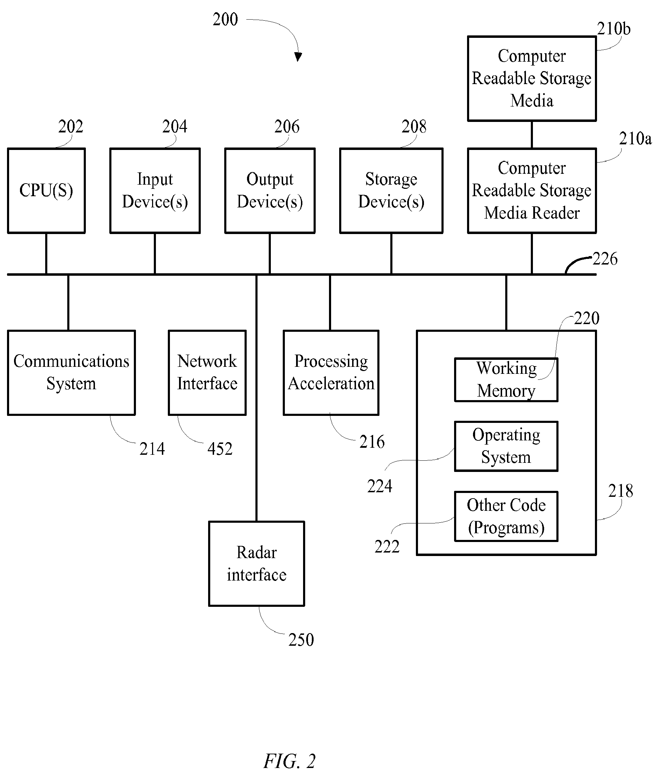

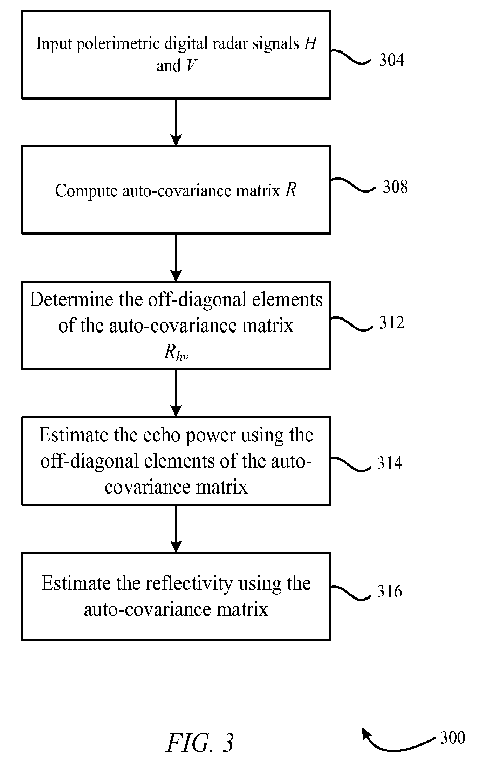

Figure 2 shows a simplified block diagram of a computer system 200 that can be coupled with a dual polarization radar system for computation of environmental parameters using various embodiments of the invention. Computer system 200 can be used to perform any or all the computations shown in Figure. 3 and/or the equations described herein. The drawing illustrates how individual system elements can be implemented in a separated or more integrated manner. The computer 200 is shown having hardware elements that are electrically coupled via bus 226. Network interface 252 can communicatively couple the computational device 200 with another computer, for example, through a network such as the Internet. The hardware elements can include a processor 202, an input device 204, an output device 206, a storage device 208, a computer-readable storage media reader 210a, a communications system 214, a processing acceleration unit 216 such as a DSP or special-purpose processor, and memory 218. The computer-readable storage media reader 210a can be further connected to a computer-readable storage medium 210b, the combination comprehensively representing remote, local, fixed, and/or removable storage devices plus storage media for temporarily and/or more permanently containing computer-readable information.

Radar interface 250 is coupled with bus 226. In some embodiments, radar interface 250 can be any type of communication interface. For example, radar interface 250 can be a USB interface, UART interface, serial interface, parallel interface, etc. Radar interface 250 can be configured to couple directly with any type of radar system such as a dual polarization radar system.

The computer system 200 also comprises software elements, shown as being currently located within working memory 220, including an operating system 224 and other code 222, such as a program designed to implement methods and/or processes described herein. In some embodiments, other code 222 can include software that provides instructions for receiving dual polarization radar data and manipulating the data according to various embodiments disclosed herein. In some embodiments, other code 222 can include software that can predict or forecast weather events, and/or provide real time weather reporting and/or warnings. Variations can be used in accordance with specific requirements. For example, customized hardware might also be used and/or particular elements might be implemented in hardware, software (including portable software, such as applets), or both. Further, connection to other computing devices such as network input/output devices can be employed.

Embodiments of the invention can be used to estimate the precipitation echo power and/or the reflectivity of a region of interest from dual polarization radar data using the off-diagonal elements of the polarimetric covariance matrix. Figure 3 is a flowchart of process 300 for estimating the reflectivity using these off-diagonal elements. At block 304 polarimetric digital radar signals, I/Q representing the complex antenna voltages from the horizontal (*H*) and vertical *(V)* receiver channels, can be input into the system. These signals can be input from digital radar data stored in an electronic format or in real-time from data being collected from a radar. The covariance matrix, ***R***, can then be calculated at block 308. The co-polar covariance element can be determined at block 312. The co-polar element (off-diagonal element) of the covariance matrix can be labeled $\hat{R}_{hv}$ or $\hat{R}_{vh}$. These two elements are typically equal and can be estimated from the complex signals received in both the horizontal, *H*, and the vertical, *V*, polarizations. Therefore $\hat{R}_{hv}$ is used to represent the usage of either off-diagonal element in the embodiment of the invention.

The reflectivity, for example, can be estimated using the co-polar covariance elements at block 316. For example, the reflectivity can be estimated using

$$dBZ \cong 10\log\left(\left|\hat{R}_{hv}\right| \times \frac{r^2}{C_h\left(G_{dr}\right)^{1/2}}\right)$$

where $C_h$ and $G_{dr}$ are the radar system calibration constant and differential gains between the two polarization channels, and $|\hat{R}_{hv}|$ represents the off-diagonal co-polar covariance element at range *r*.

In a dual polarization radar system, the *H* and *V* signals are highly correlated in precipitation echo. Because of this high degree of correlation, $\hat{\rho}_{co}$, the absolute value (e.g., modulus) of co-polar covariance element, $R_{hv}$, becomes the logarithmic (geometric) mean of the echo powers in horizontal and vertical polarization,

$$\sqrt{P_h P_v} = \frac{\left|\hat{R}_{hv}\right|}{\left|\hat{\rho}_{co}\right|}$$

where $P_h = \langle |V_h|^2 \rangle$ and $P_v = \langle |V_v|^2 \rangle$ define the echo powers in each polarization. At the limit of high $\rho_{HV}$, (0), the finitely sampled ray estimator $|\hat{R}_{hv}|$ can be unbiased.

The mean power, $P_h$, of the echo signal received in a single polarization of a pulsed weather radar is typically obtained by averaging echo power samples, based on

$$P_h = \left\langle \left| V_h \right|^2 \right\rangle$$

where h refers to the antenna voltages in a definite polarization - typically the horizontal polarization. The mean echo power is related to the radar reflectivity $\eta_h$, which is defined as the average radar cross section of distributed targets in a unit volume of observation:

$$\eta_h = \frac{1}{V} \sum_{i \in V} 4\pi \left| S_{hh} \right|_i^2$$

where $S_{hh}$ is the horizontal back-scattering cross-section element of a scatterer in the volume.

The relation of mean echo power and $\eta_h$ can be

$$P_h = C_h \, \eta_h / r^2$$

where $C_h$ combines the radar system specific constant features. The dependence on the range of observation *(r)* includes geometric factors only.

In the context of a dual polarization radar, a signal vector is returned that includes the complex antenna voltages projected in the horizontal, $V_h$, and vertical, $V_v$, polarization states. $\begin{bmatrix} V_h(m;n) \\ V_v(m;n) \end{bmatrix}$ is the $n^{th}$ signal sample vector at gate *m* in a dual polarization radar. Instead of signal power, the signal now expands into the covariance matrix, R, which has the expectation value

$$R = \begin{bmatrix} \left\langle V_h V_h^* \right\rangle & \left\langle V_h V_v^* \right\rangle \\ \left\langle V_v V_h^* \right\rangle & \left\langle V_v V_v^* \right\rangle \end{bmatrix}$$

$$= \begin{bmatrix} R_{hh} & R_{hv} \\ R_{vh} & R_{vv} \end{bmatrix}$$

Generally, $R_{hv} = R_{hv}^*$ applies. Using $R_{hh} = P_h = |H|^2$ and $R_{vv} = P_v = |V|^2$, the single polarization radar reflectivity $\eta_h$ can be expanded into a pair of radar reflectivities ($\eta_h$, $\eta_v$), defined in the horizontal and vertical polarizations

$$R_{hh} = C_h \, \eta_h / r^2$$

$$R_{vv} = C_h G_{dr} \, \eta_v / r^2$$

in which the common features of the radar calibration constant $C_h$ are reused in the vertical polarization. The adjustment factor $G_{dr}$, accounts for the differential signal gains between the channels *H* and *V.* The system adjusted ratio

$$G_{dc} \frac{R_{hh}}{R_{vv}} = \eta_h / \eta_v = |S_{hh}|^2 / |S_{vv}|^2 = Z_{dr}$$

can define the differential reflectivity, which can be sensitive to the effective horizontal vs. vertical axis ratios of the back scatterers.

The absolute value (modulus) of the co-polar covariance element $|R_{hv}|$ also relates to the radar reflectivities in the horizontal and vertical polarizations, too. In particular their geometric mean can be given by

$$|R_{hv}| = C_s (G_{dc})^{1/2} \frac{(\eta_h \eta_v)^{1/2}}{r^2} .$$

The voltages from a dual polarization radar can include four significant terms: the horizontal signal $H$ and the noise $n_h$, and the vertical signal $V$ and the noise $n_v$. The co-polar covariance element $R_{hv}$ can be useful because these noise terms are uncorrelated. The co-polar covariance element can then be determined from

$$R_{hv} = \begin{bmatrix} R_{hh}^S + P_h^N & R_{hv}^S \\ R_{vh}^{S*} & R_{vv}^S + P_v^N \end{bmatrix}$$

The cross diagonal elements do not contain noise terms. The following properties of white noise expectation values have been utilized

$$\langle n_h n_v^* \rangle = \langle n_v n_h^* \rangle = 0$$

$$\langle n_h n_h^* \rangle = P_h^N$$

$$\langle n_v n_v^* \rangle = P_v^N$$

$R_{hh}^s$, $R_{vv}^s$, and $R_{hv}^s$ refer to elements obtained from signal alone.

As shown above, the co-polar covariance element $R_{hv}$ are not affected by white noise. This is in contrast to the legacy power estimator $P_h$ that includes noise. Moreover, these are biased when the noise is significant with respect to the signal. The embodiments of the invention, therefore, use the off-diagonal element of the covariance matrix $R_{hv}$ to calculate the reflectivity. Because noise is not present, the results show improved sensitivity. Given any signal, $|R_{hv}|$ appears insensitive to white noise.

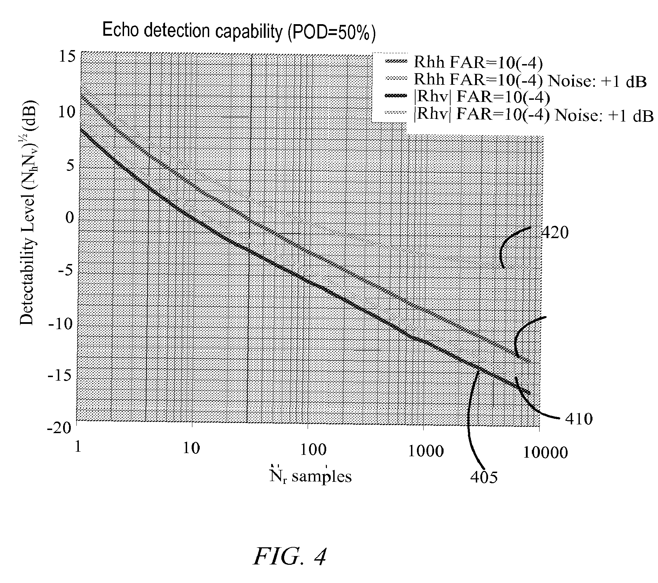

Figure 4 is a comparison of the detection capabilities using $\hat{R}_{hh}$ and $\hat{R}_{hv}$ based echo power estimators as a function of samples. The probability of detection is 50% and false alarm rate 10⁻⁴. Green line 415 and blue line 405 are the detection capabilities of the $\hat{R}_{hh}$ and $|\hat{R}_{hv}|$ echo power estimators in ideal conditions. Orange line 420 and light blue line 410 represent the detection capabilities in typical operational settings where a Signal to Noise / Noise thresholding ratio of 1 dB is set due to variability in the noise background.

In precipitation where $P_H$ and $P_V$ are highly correlated in range, shown by smooth co-polar correlation data, adjacent range gates I/Q data, M, from same pulse sample may be summed leading to $\hat{R}_{hv}(r)$.

The co-polar covariance element can be estimated through a sequence of Npulses at $m^{th}$ range index location

$$\left| \hat{R}_{hv}(m) \right| = \frac{1}{N(2M-1)} \left| \sum_{i=0}^{N-1} \sum_{j=m-M}^{\overline{m}+M} V_h^*(i,j) V_v(i,j) \right|$$

One advantage of the estimator $\hat{R}_{hv}(m)$ is that it can be summed through local gates providing additional averaging, further reducing the apparent finite noise floor of $\hat{R}_{hv}$.

The estimator value, $|\hat{R}_{hv}(r)|$, can be related to the logarithmic mean of the reflectivity factors $\eta_h$ and $\eta_v$, observed in a local interval at distance $r$.

$$\left|\hat{R}_{hv}\right| = C_h\left(G_{dr}\right)^{1/2}\frac{\left(\eta_h\eta_v\right)^{1/2}}{\overline{r}^{-2}}$$

This estimator, $\hat{R}_{hv}(r)|$, can lead to significantly improved signal-to-noise ratios. It can be used to recover and/or exceed the initial loss of 3 dB due power splitting, for typical operational settings. Using settings optimized for far distance echo, polarimetric radar can detect weak far distance precipitation at with a sensitivity that is more than factor of ten better than that obtained by the legacy method in single polarization.

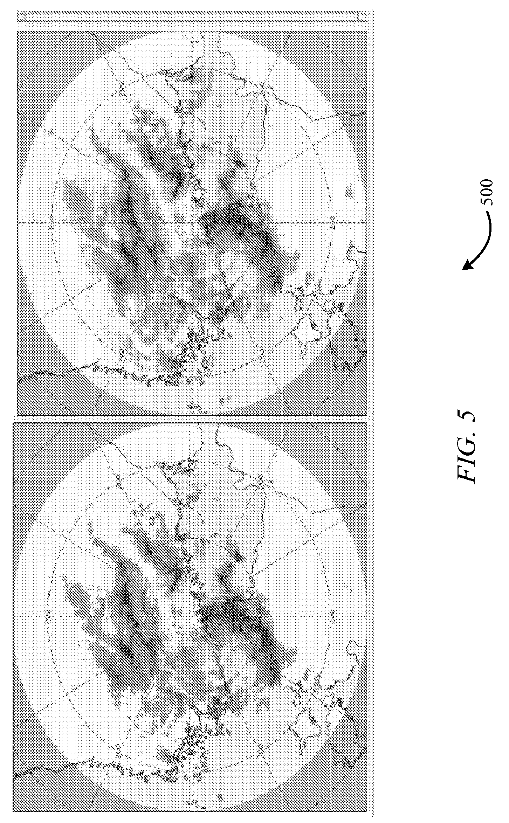

Figure 5 - compares the reflectivity derived from $\hat{R}_{hh}$ and $\hat{R}_{hv}$ based echo power estimators from radar observations and the corresponding expected noise thresholds. The dashed lines are the expected noise floor for the current state of art $\hat{R}_{hh}$ and $\hat{R}_{hv}$ using N samples and m range gates.

The sensitivity increase of $|\hat{R}_{hv}|$ reflectivity is apparent.

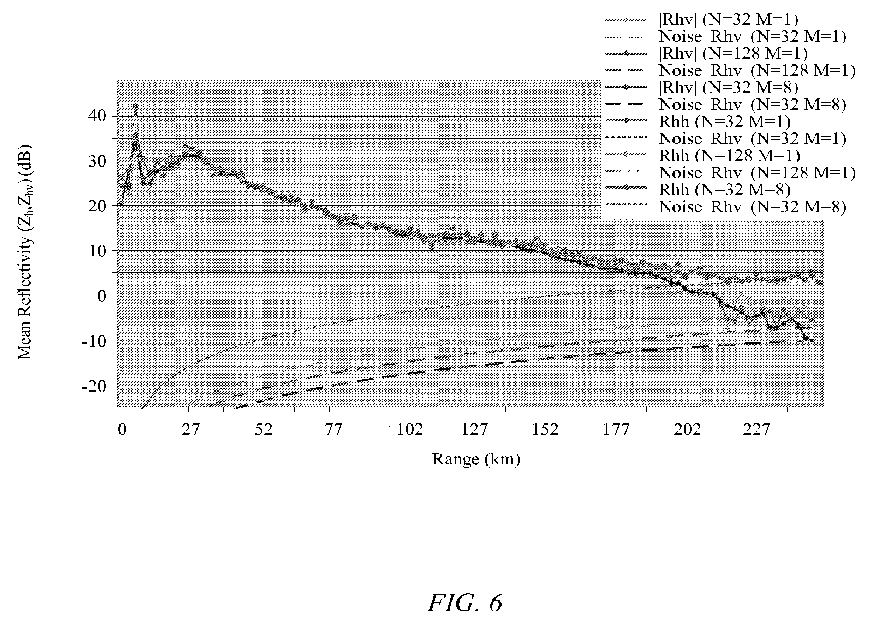

Figure 6 is a side-by-side comparison of radar display images using conventional techniques and embodiments of the invention. The image on the right was developed using embodiments described herein. The improved sensitivity is evident in the additional information included in the right image.

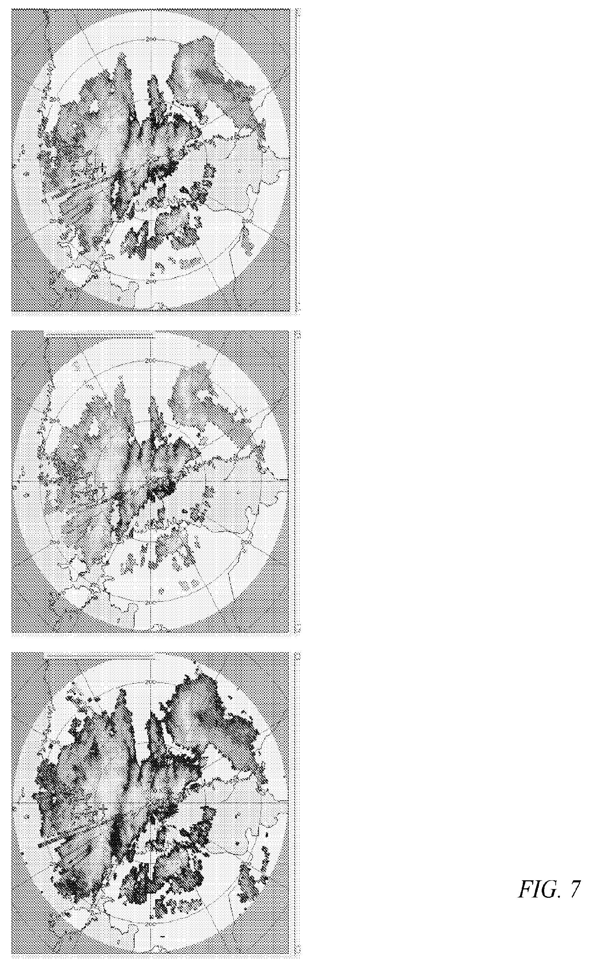

Figure 7 shows radar observations using various techniques. The first image is taken from dual polarization radar transmitting full power horizontal polarization only. The second radar observation is taken a few moments later by a simultaneous transmit and receive mode (STAR) dual polarization radar where transmit power is split between the horizontal and vertical polarizations. The 3 dB loss in sensitivity compared to the previous images caused by splitting the transmit power into two polarization states is obvious. The last image is the same STAR mode radar observation as in the middle image but using the techniques described in this invention (n = 64, m = 16). The +10 dB sensitivity gain using this processing technique is evident in the bottom image.

## Claims

1. A method comprising:

   propagating a radar signal into a region of interest using a dual polarization radar transmitter,
   collecting dual polarization radar echo data scattered form within the region of interest,
   wherein the radar echo data comprises horizontal and vertical complex voltages,
   **characterized in that**
   the covariance matrix (R) from the radar echo data is calculated; and
   the precipitation profiles are estimated from an absolute value of an off-diagonal element of the covariance matrix ($|R_{hv}|$, $|R_{vh}|$).

2. The method according to claim 1, wherein the reflectivity is estimated using

$$dBZ \cong 10\log\left(\left|\hat{R}_{hv}\right| \times \frac{r^2}{C_h\left(G_{dr}\right)^{1/2}}\right),$$

   where $|R_{hv}|$ is the absolute value of the off-diagonal element of the covariance matrix, r is the mean radial distance, $C_h$ and $G_{dr}$ are calibration constants.

3. A radar system comprising:

   a transmitter configured to transmit polarized radar signals into a region of interest,
   a receiver configured to receive a polarized data scattered from the region of interest, wherein
   the polarized data comprises horizontal and vertical complex voltages; and a computer system (200) coupled at least with the receiver,

**characterized in that**

the computer system (200) is configured to calculate the covariance matrix (R) of the polarized data and the reflectivity of the region of interest is estimated using an absolute value of an off-diagonal element of the covariance matrix ($|R_{hv}|$, $|R_{vh}|$).

4. The radar system according to claim 3, wherein the reflectivity is estimated from the absolute power of an off-diagonal element of the covariance matrix ($R_{hv}$, $R_{vh}$).

5. The radar system according to claim 10, wherein the reflectivity is estimated using

$$dBZ \cong 10\log\left(\left|\hat{R}_{hv}\right| \times \frac{r^2}{C_h(G_{dr})^{1/2}}\right),$$

where $|R_{hv}|$ is the absolute value of the off-diagonal element of the covariance matrix, r is the mean radial distance, and $C_h$ and $G_{dr}$ are calibration constants.

**Patentansprüche**

1. Verfahren umfassend:

Übertragen eines Radarsignals in eine Zielregion unter Verwendung eines dualpolarisierten Radartransmitters, Erfassen von dualpolarisierten Radarechodaten, die aus der Zielregion heraus gestreut werden, wobei die Radarechodaten horizontale und vertikale komplexe Spannungen umfassen, **dadurch gekennzeichnet, dass** die Kovarianzmatrix (R) ausgehend von den Radarechodaten berechnet wird; und die Präzipitationsprofile ausgehend von einem Absolutwert eines außerhalb der Diagonale liegenden Elements der Kovarianzmatrix ($|R_{hv}|$, $|R_{vh}|$) geschätzt werden.

2. Verfahren nach Anspruch 1, wobei die Reflektivität unter Verwendung von

$$dBZ \cong 10log\left(\left|\bar{R}_{hv}\right| \times \frac{r^2}{C_h(G_{dr})^{1/2}}\right)$$

geschätzt wird,

wobei $|R_{hv}|$ der Absolutwert des außerhalb der Diagonale liegenden Elements der Kovarianzmatrix ist, $\bar{r}$ der mittlere radiale Abstand ist, $c_h$ und $c_{dr}$ Kalibrierkonstanten sind.

3. Radarsystem umfassend:

eine Transmitter, der ausgelegt ist, polarisierte Radarsignale in eine Zielregion zu senden, einen Empfänger, der ausgelegt ist, polarisierte Daten zu empfangen, die von der Zielregion gestreut werden, wobei die polarisierten Daten horizontale und vertikale komplexe Spannungen umfassen; und ein Computersystem (200) welches mit wenigstens einem Empfänger verbunden ist,

**dadurch gekennzeichnet, dass**

das Computersystem (200) ausgelegt ist, die Kovarianzmatrix (R) der polarisierten Daten zu berechnen, und die Reflektivität der Zielregion unter Verwendung eines Absolutwertes eines außerhalb der Diagonale liegenden Elements der Kovarianzmatrix ($|R_{hv}|$, $|R_{vh}|$) geschätzt wird.

4. Radarsystem nach Anspruch 3, wobei die Reflektivität ausgehend von der absoluten Leistung eines außerhalb der Diagonalen liegenden Elements der Kovarianzmatrix ($|R_{hv}|$, $|R_{vh}|$) geschätzt wird.

5. Radarsystem nach Anspruch 10, wobei die Reflektivität unter Verwendung von

$$dBZ \cong 10log\left(\left|\hat{R}_{hv}\right| \times \frac{r^2}{C_h(G_{dr})^{1/2}}\right)$$

geschätzt wird,

wobei $|R_{vh}|$ der Absolutwert des außerhalb der Diagonale liegenden Elements der Kovarianzmatrix ist, $\bar{r}$ der mittlere radiale Abstand ist,
$c_h$ und $c_{dr}$ Kalibrierkonstanten sind.

**Revendications**

1. Procédé comprenant les étapes consistant à :

propager un signal radar dans une région d'intérêt en utilisant un émetteur radar à polarisation double et recueillir les données de l'écho radar à double polarisation venant de l'intérieur de la région d'intérêt, dans lequel les données de l'écho radar comprennent des tensions horizontales et verticales complexes,

**caractérisé en ce que** :

la matrice de covariance (R) provenant des données de l'écho radar est calculée ; et
les profils de précipitation sont estimés à partir d'une valeur absolue d'un élément hors diagonale de la matrice de covariance ($|R_{hv}|$, $|R_{vh}|$).

2. Procédé selon la revendication 1, dans lequel la réflectivité est estimée en utilisant la formule :

$$dBZ \cong 10\log\left(\left|\hat{R}_{hv}\right| \times \frac{r^2}{C_h(G_{dr})^{1/2}}\right),$$

où $|R_{hv}|$ est la valeur absolue de l'élément hors diagonale de la matrice de covariance, $\bar{r}$ est la distance radiale moyenne et $C_h$ et $G_{dr}$ sont des constantes d'étalonnage.

3. Système de radar comprenant :

un émetteur configuré pour transmettre des signaux radar dans une région d'intérêt,
un récepteur configuré pour recevoir des données polarisées émises de la région d'intérêt, dans lequel les données polarisées comprennent des tensions horizontales et verticales complexes ; et un système informatique (200) couplé au moins au récepteur,

**caractérisé en ce que** :

le système informatique (200) est configuré pour calculer la matrice de covariance (R) des données polarisées et la réflectivité de la région d'intérêt est estimée en utilisant une valeur absolue d'un élément hors diagonale de la matrice de covariance ($|R_{hv}|$, $|R_{vh}|$).

4. Système radar selon la revendication 3, dans lequel la réflectivité est estimée à partir de la puissance absolue d'un élément hors diagonale de la matrice de covariance ($|R_{hv}|$, $|R_{vh}|$).

5. Système radar selon la revendication 10, dans lequel la réflectivité est estimée en utilisant la formule :

$$dBZ \cong 10 \log\left( \left|\hat{R}_{hv}\right| \times \frac{r^2}{C_h \left(G_{dr}\right)^{1/2}} \right),$$

où $|R_{hv}|$ est la valeur absolue de l'élément hors diagonale de la matrice de covariance, $\bar{r}$ est la distance radiale moyenne et $C_h$ et $G_{dr}$ sont des constantes d'étalonnage.

*FIG. 1*

200

210b
Computer Readable Storage Media

202
CPU(S)

204
Input Device(s)

206
Output Device(s)

208
Storage Device(s)

210a
Computer Readable Storage Media Reader

226

Communications System
214

Network Interface
452

Processing Acceleration
216

220
Working Memory

Operating System
224

Other Code (Programs)
222

218

Radar interface
250

*FIG. 2*

Input polerimetric digital radar signals $H$ and $V$ — 304

Compute auto-covariance matrix $R$ — 308

Determine the off-diagonal elements of the auto-covariance matrix $R_{hv}$ — 312

Estimate the echo power using the off-diagonal elements of the auto-covariance matrix — 314

Estimate the reflectivity using the auto-covariance matrix — 316

*FIG. 3* — 300

FIG. 4

*FIG. 5*

500

*FIG. 6*

FIG. 7

**EP 2 726 901 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007222661 A1